(19) Europäisches Patentamt
European Patent Office
Office européen des brevets

(11) **EP 1 926 986 B1**

(12) **EUROPÄISCHE PATENTSCHRIFT**

(45) Veröffentlichungstag und Bekanntmachung des Hinweises auf die Patenterteilung:
**13.05.2009 Patentblatt 2009/20**

(21) Anmeldenummer: **06805775.1**

(22) Anmeldetag: **20.09.2006**

(51) Int Cl.:
***G01N 27/24*** *(2006.01)* ***B29C 47/92*** *(2006.01)*

(86) Internationale Anmeldenummer:
**PCT/EP2006/009138**

(87) Internationale Veröffentlichungsnummer:
**WO 2007/033820 (29.03.2007 Gazette 2007/13)**

(54) **VERFAHREN ZUR KAPAZITIVEN DETEKTION VON FEHLSTELLEN IN POLYMERROHREN UND VORRICHTUNG**

METHOD FOR THE CAPACITIVE DETECTION OF FLAWS IN POLYMER TUBES, AND DEVICE

PROCEDE ET DISPOSITIF DE DETECTION CAPACITIVE DE DEFAUTS DE TUYAUX POLYMERIQUES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **22.09.2005 DE 102005045222**

(43) Veröffentlichungstag der Anmeldung:
**04.06.2008 Patentblatt 2008/23**

(73) Patentinhaber: **REHAU AG + Co**
**95111 Rehau (DE)**

(72) Erfinder:
• **WISSMATH, Siegfried**
**D-95111 Rehau (DE)**
• **ROTHEMUND, Florian**
**95111 Rehau (DE)**

(56) Entgegenhaltungen:
**DE-A1- 2 025 644**      **DE-A1- 2 155 509**
**DE-A1- 2 505 221**      **DE-B- 1 095 525**
**JP-A- 9 145 304**      **US-A- 2 992 392**

**Beschreibung**

Die Erfindung betrifft ein Verfahren und eine Vorrichtung zur kapazitiven Detektion von Fehlstellen in Polymerrohren, vorrangig in Rohren aus vernetztem Polyethylen (PE-X).

Vernetzte PE-X-Rohre finden hauptsächlich Verwendung im Bausektor, hier vorzugsweise als Trinkwasser-, Heizungs- oder Gasrohre.

Von den drei üblichen Vernetzungsverfahren von PE, nämlich mittels energiereicher Strahlen (PE-Xc) oder durch Zugabe von Peroxid (PE-Xa) oder durch Pfropfung mittels Trimethoxyvinylsilan (PE-Xb), beträgt der jährliche Tonnageanteil der peroxidvernetzten Rohre (PE-Xa) etwa 31 % an der Gesamtproduktion von PE-X.

Nachteilig am Vernetzungsverfahren mittels Peroxid ist auch heute noch vor allem der Umstand, dass die chemische Umsetzung des Peroxids mit dem PE im Extruder nur in einem sehr engen, verfahrenstechnisch schwierig beherrschbaren Bereich quantitativ und somit ohne Bildung von Fehlstellen, wie Vorvernetzungen oder Lunker, verläuft. Diese Fehlstellen können zu vorzeitigem Versagen des Rohres führen. So sind beispielsweise bei einer Fußbodenheizung schwerwiegende Bauschäden zu erwarten und bei Gasrohren sogar Leib und Leben gefährdet.

Es gab daher schon frühzeitig Versuche, vor allem die Verfahrenstechnik der Rohrherstellung zu optimieren und parallel dazu zuverlässige Verfahren zur Detektion von Fehlstellen im extrudierten Rohr zu entwickeln.

Stand der Technik bei der Detektion von Fehlstellen in PE-X-Rohren sind heute insbesondere folgende Methoden:

Hochspannungsverfahren

Beim Hochspannungsverfahren wird das zu prüfende Rohr durch eine Ringelektrode (z.B. Ringbürste) gezogen, wobei sich an gleicher Stelle im Rohrinnem eine geerdete Dornelektrode befindet. Die Prüfspannung wird zwischen Ringelektrode und Dornelektrode angelegt. Nachteilig am Hochspannungsverfahren sind das hohe Gefahrenpotential auf Grund der anzulegenden Spannung im Bereich von ca. 12 bis 50 kV und die Entstehung von Ozon bei Hochspannungsdurchschlägen, die Abhängigkeit von der Rohrwanddicke (Außendurchmesser ≤ 20 mm) und vor allem, dass nur bestimmte Fehler (Haarrisse, durchgängige Löcher und Fremdkörper inklusive Vorvernetzungen) detektierbar sind - mit der weiteren Einschränkung, dass sich die Fehler nahezu durch die gesamte Rohrwand erstrecken müssen. Das Hochspannungsverfahren prüft letztendlich die elektrischen Isolationseigenschaften eines Rohres.

Ultraschallverfahren

Dabei sind verschiedene Systeme zu unterscheiden: stationär um das Rohr angeordnete Ultraschallprüfköpfe erfassen jeweils nur einen sehr schmalen, linearen Bereich, während rotierende Prüfkopfsysteme das Kunststoffrohr schraubenförmig messen und prüfen. Das Ultraschallverfahren hat den Hauptnachteil, dass sehr hohe Investitionskosten, meist > 100.000 EUR, anfallen, weiterhin, dass das Verfahren nach wie vor vorrangig zur Wanddicken- und/oder Durchmesserbestimmung mittels Laufzeitmessung eingesetzt wird.

Kapazitive zum überwachen von Polymerrohren sind z.B. aus DE 1095525 bekannt.

Aufgabe der vorliegenden Erfindung ist es, ein Verfahren und die entsprechende Vorrichtung bereitzustellen, das zuverlässig die Detektion - gerade auch eingeschlossener - Fehlstellen auf dem gesamten Rohrumfang und über die gesamte Wandstärke des Rohres ermöglicht, das unabhängig von der Lichtdurchlässigkeit des Rohres arbeitet, weiterhin vom Verfahren her kein Gefährdungspotential aufweist und insbesondere möglichst kostengünstig ist.

Die Aufgabe konnte gelöst werden durch ein kapazitives Dreielektrodenverfahren mit den kennzeichnenden Merkmalen des Patentanspruchs 1, sowie durch eine Vorrichtung gemäß Patentanspruch 8. Bevorzugte Ausführungsformen und Weiterbildungen finden sich in den jeweiligen Unteransprüchen.

Das wesentliche Merkmal des erfindungsgemäßen Verfahrens ist, dass mittels eines, in einem Gehäuse angeordneten, rohrförmigen Kondensators, der an die Geometrie des zu untersuchenden Polymerrohres angepasst ist, in Verbindung mit mindestens einer Empfangs- und mindestens einer Sendeantenne jeweils ein elektrisches Feld erzeugt wird. Hierbei befindet sich die Sendeantenne im Gehäusemittelteil, die Empfangsantenne im Bereich der Gehäuseflansche. Das im Gehäusemittelteil erzeugte elektrische Feld wird durch paarweise, ringförmige und parallel angeordnete Messelektroden, welche das zu prüfende Rohr umfassen, überwacht und evtl. Feldänderungen mittels einer Anzeige- und Auswertungselektronik detektiert. Das im Bereich der Gehäuseflansche erzeugte elektrische Feld wird über die Empfangsantenne an die im Bereich des Gehäusemittelteils weitgehend ortsfest gehaltene Sendeantenne über einen elektrischen Leiter übertragen.

Das zu untersuchende Polymerrohr selbst und der Luftspalt zwischen Polymerrohr und Kondensatorelektroden bilden das Dielektrikum.

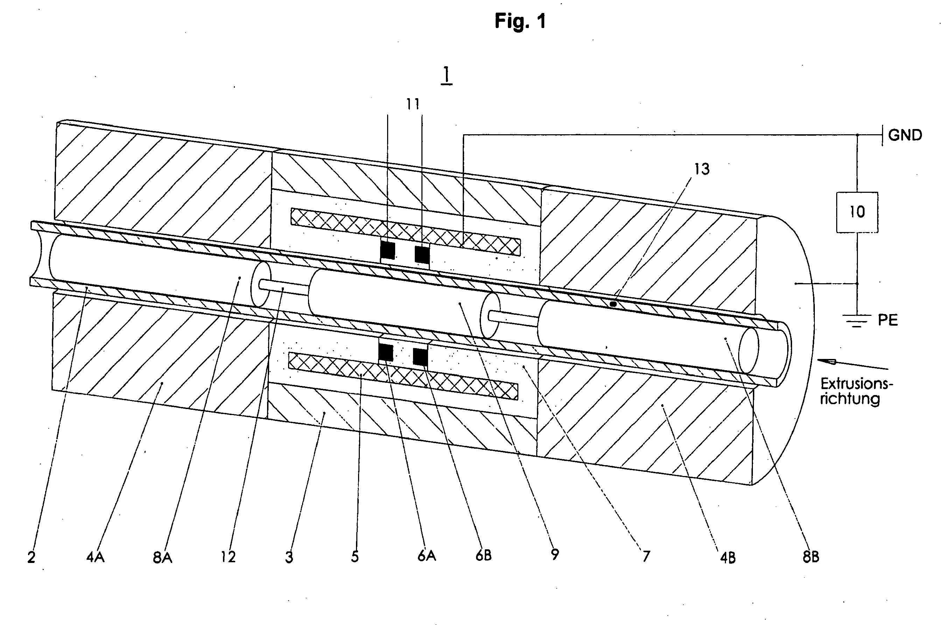

Bezugnehmend auf die Fig. 1 wird das Verfahren sowie die zugehörige Vorrichtung näher erläutert. Fig. 1 zeigt dabei die Vorrichtung zur Durchführung des Verfahrens geschnitten in einer perspektivischen Ansicht.

Das zu prüfende Polymerrohr (2) durchläuft - vorzugsweise unmittelbar nach dem Herstellungsprozess - die erfindungsgemäße Vorrichtung derartig, dass die Achse des zu prüfenden Rohres (2) - die zugleich die Extrusionslinie darstellt - mit der Längsachse der Vorrichtung übereinstimmt.

Bewegt sich nun das extrudierte Polymerrohr (2) mit einer eingeschlossenen Fehlstelle (13) in der Wandung durch den Messbereich an der in Bewegungsrichtung des Polymerrohres (2) nächstliegenden Messelektrode (6B) vorbei, ändert sich dort lokal das Dielektrikum.

Dadurch empfängt Messelektrode (6B) ein gestörtes Signal, während das Signal an der Messelektrode (6A) noch ungestört ist.

Im weiteren Verlauf der Extrusion wird das Rohrstück mit der eingeschlossenen Fehlstelle (13) aus dem Bereich der Messelektrode (6B) heraus und in den Bereich der Messelektrode (6A) hineinbewegt. Das hat nun zur Folge, dass Messelektrode (6B) nun wieder das ungestörte Signal empfängt, während die Messelektrode (6A) ein gestörtes Signal empfängt.

Erfindungsgemäß sind mindestens zwei paarweise angeordneten Messelektroden (6A; 6B) erforderlich, da erst der Vergleich der beiden an den Messelektroden (6A; 6B) abgegriffenen Signale eine zuverlässige Fehlstellendetektion ermöglicht.
Eine einzige Messelektrode würde dagegen eine zufällige Schwankung der Kondensatorkapazität bereits als Fehlstelle detektieren.

Es ist ein weiterer, wesentlicher Teil des erfindungsgemäßen Verfahrens bzw. der erfindungsgemäßen Vorrichtung, dass das Gehäuse einerseits mit dem positiven Pol ("heißes Ende") einer hochfrequenten Wechselspannungsquelle - vorzugsweise einem Rechtecksignal - und andererseits dem Schutzleiter, also dem Erdpotential (PE) verbunden ist, und dass die Kondensatorelektrode sowohl mit dem negativen Pol ("kaltes Ende") einer hochfrequenten Wechselspannungsquelle als auch mit Masse (GND) Kontakt hat.
Das Gehäuse, die Kondensatorelektrode und die Messelektroden sind gegeneinander jeweils elektrisch isoliert.

Die von den Messelektroden empfangenen, jeweils paarweisen Signale werden einer üblichen Auswerteelektronik (11) zugeführt: In Eingangswechselspannungsverstärkern erfolgt die Verstärkung der Signale, anschließend das Gleichrichten über Dioden, eine weitere Verstärkung durch Operationsverstärker und die Mittelwertbildung der paarweisen Eingangssignale.
Das Ausgangssignal der Mittelwertbildung wird durch einen Operationsverstärker gegenüber Masse (GND) verglichen und nachfolgend differenziert. Dieses differenzierte Signal kann für verschiedene Aktionen benutzt werden.

Die erfindungsgemäße Vorrichtung besteht aus folgenden Komponenten:

1. Gehäuse (1)

Das metallische Gehäuse (1) - vorzugsweise aus Aluminium ausgeführt - dient als tragendes Element. Es besteht bevorzugt aus einem rohrförmigen Körper, der aus Gründen der besseren Zugänglichkeit und/oder Montage entlang seiner Symmetrielängsachse geteilt sein kann.

Das metallische Gehäuse (1) gliedert sich wie folgt auf:

a) Gehäusemittelteil (3)

Der Gehäusemittelteil (3) trägt die elektrischen Anschlüsse, die rohrförmige Elektrodenaufnahme (7) und die beiden Gehäuseflansche (4A; 4B). Es ist koaxial zum zu prüfenden Polymerrohr (2) ausgerichtet.

Die rohrförmige Elektrodenaufnahme (7) enthält die rohrförmige Kondensatorelektrode (5), die Messelektroden (6A; 6B) und die elektrische Isolation der Elektroden untereinander und gegenüber dem Gehäusemittelteil (3).

Die metallische Kondensatorelektrode (5) besteht vorzugsweise aus Aluminium, sie ist rohrförmig und kann aus Gründen der besseren Zugänglichkeit und/oder Montage entlang ihrer Symmetrielängsachse geteilt sein.

Die Messelektroden (6A; 6B), vornehmlich ring- oder ringsegmentförmig ausgeführt, sind elektrisch leitfähig, vorzugsweise aus Aluminium, und zueinander parallel und paarweise angeordnet. Der Abstand zwischen dem Innendurchmesser der Messelektroden (6A; 6B) und der Oberfläche des Polymerrohrs (2) ist ≤ 5 mm zu halten.

Des weiteren sind die Messelektroden (6A; 6B) erfindungsgemäß möglichst mittig innerhalb der Kondensatorelektrode (5) zu positionieren.
Zweckmäßigerweise ist die Anordnung der Messelektroden (6A; 6B) zueinander so auszulegen, dass für das Verhältnis der Breite (b) einer Messelektrode (6A; 6B) zum Abstand (w) der beiden zueinander gilt:

$$b/w = 0,5 \text{ bis } 0,66.$$

b) Gehäuseflansche (4A; 48)

Die beiden Gehäuseflansche (4A; 4B) sind beiderseits am zylindrischen Gehäusemittelteil (3) - zweckmäßigerweise lösbar - befestigt und dienen der Übertragung des hochfrequenten Sendesignals mittels kapazitiver Kopplung auf die Empfangsantenne (9), sowie der Führung des zu prüfenden Polymerrohrs (2).

Die Innendurchmesser der Gehäuseflansche und der Außendurchmesser des Polymerrohrs (2) sind so zu wählen, dass unter Berücksichtigung der Rohrtoleranzen ein Luftspalt ≤ 3 mm erreicht wird.

Das Durchmesserverhältnis von Polymerrohr (2) ($\alpha$) zu Messelektrode (6A; 6B) ($\beta$) zu Kondensatorelektrode (5) ($\gamma$) beträgt bevorzugt 1 zu 1,3 zu 1,6, wobei der Wert von $\beta$ zwischen 0,6 und 2,0 und der Wert von $\gamma$ zwischen 0,9 und 2,3 liegen kann.

## 2. Innendorn

Im Bereich des Gehäuses (1) befindet sich der Innendorn erfindungsgemäß im Inneren des zu prüfenden Polymerrohrs (2) und wird - vorzugsweise magnetisch - ortsfest und konzentrisch gehalten. Er besteht aus folgenden Komponenten, die miteinander über einen elektrischen Leiter (12) verbunden sind:

a) Empfangsantenne (8)

Die Empfangsantenne (8) - vorzugsweise aus Aluminium - kann ein- oder mehrteilig ausgeführt sein. Sie empfängt das hochfrequente Signal vom Gehäuseflansch (4A; 4 B) und leitet dieses weiter an die Sendeantenne (9).
Die Länge der Empfangsantenne (8) darf die Länge des Gehäuseflansches (4A; 4B) nicht überschreiten, sie beträgt das 2- bis 7-fache des Durchmessers des Polymerrohres (2).

Des weiteren ist die Empfangsantenne (8) so auf dem Innendorn zu positionieren, dass sie sich jeweils möglichst mittig innerhalb des zugehörigen Gehäuseflansches (4A; 4B) befindet.

b) Sendeantenne (9)

Die Sendeantenne (9) kann ein- oder mehrteilig ausgeführt sein. Sie bildet sowohl mit der Kondensatorelektrode (5), als auch mit den Messelektroden (6A; 6B) die drei zylindrischen, koaxialen Kondensatoren.
Die elektrostatischen Felder zwischen Sendeantenne (9) und Kondensatorelektrode (5) bzw. Sendeantenne (9) und Messelektroden (6A; 6B) durchdringen das zu prüfende Polymerrohr (2) radial und homogen. Die Länge der Sendeantenne (9) des Innendorns darf die Länge der Kondensatorelektrode (5) nicht überschreiten, sie sollte sich möglichst mittig innerhalb der Kondensatorelektrode (5) befinden.

Die jeweilige Länge ($\delta$) von Sendeantenne (9) zu der Länge ($\varepsilon$) der Kondensatorelektrode (5) zu der Länge ($\chi$) der Empfangsantenne (8) weist vorzugsweise folgendes Verhältnis auf: $\delta$ zu $\varepsilon$ zu $\chi$ = 1 zu 1,2 zu 1,3, wobei der Wert von $\varepsilon$ zwischen 1,1 und 2,0, der Wert von $\chi$ zwischen 1,2 und 2,1 liegen kann.

Nachfolgend wird die Erfindung anhand eines Ausführungsbeispiels beschrieben:

Das zu prüfende PE-X-Rohr (2) hat einen Außendurchmesser von 24 mm, einen Innendurchmesser von 20 mm, entsprechend eine Wandstärke von 2 mm; es verfügt in der Rohrwandung über eine Fehlstelle (13), einen voll eingeschlossenen Partikel mit 3 mm Durchmesser aus einem Füllstoffagglomerat.

Nach der Abkühlzone der Extrusionsstrecke läuft das Rohr online in die erfindungsgemäße Prüfvorrichtung, deren Gehäuseteile jeweils als Halbschalen ausgeführt sind.
Der Luftspalt zwischen dem Innendurchmesser des zylindrischen Teils des Gehäuseflansches (4A; 4B) und dem Außendurchmesser des Polymerrohrs (2) beträgt jeweils 1 mm. Der Abstand zwischen dem Innendurchmesser der Messelektroden (6A; 6B) und dem Außendurchmesser des PE-X-Rohres (2) beträgt jeweils 3 mm. Die beiden, jeweils aus zwei Halbringen bestehenden Messelektroden (6A; 6B) sind in einem Abstand von 3 mm zueinander angeordnet, ihre jeweilige Breite beträgt 2 mm.
Die Kondensatorelektrode (5) besteht aus zwei Halbschalen.

Die Außendurchmesser der jeweiligen Messelektrode betragen 26 mm, der der Kondensatorelektrode 33 mm.

Die Länge der Kondensatorelektrode (5) beträgt 80 mm, der Sendeantenne (9) 47 mm, der beiden Empfangsantennen (8) insgesamt 168 mm.

Bewegt sich nun das extrudierte Polymerrohr (2) mit der eingeschlossenen Fehlstelle (13) in der Wandung, durch den Messbereich an der in Bewegungsrichtung des Polymerrohres (2) nächstliegenden Messelektrode (6B) vorbei, ändert sich dort lokal das Dielektrikum.

Dadurch empfängt Messelektrode (6B) ein gestörtes Signal, während das Signal an der Messelektrode (6A) noch ungestört ist.

Im weiteren Verlauf der Extrusion wird das Rohrstück mit der Fehlstelle (13) aus dem Bereich der Messelektrode (6B) heraus und in den Bereich der Messelektrode (6A) hineinbewegt. Das hat nun zur Folge, dass Messelektrode (6B) nun wieder das ungestörte Signal empfängt, während die Messelektrode (6A) ein gestörtes Signal empfängt.

Diese Messsignale werden nun ausgewertet und über eine Schaltstufe zum Schalten eines Relais genutzt, das beispielsweise mit einem entsprechenden Laser verbunden ist. Dieser kennzeichnet Beginn und Ende der detektierten Fehlstelle (13) im Polymerrohr (2), später wird diese dann aus dem Rohrbund herausgetrennt.

**Patentansprüche**

1. Verfahren zur Detektion von Fehlstellen in Polymerrohren, insbesondere solchen aus vernetztem Polyethylen, wobei in einem Gehäuse (1), bestehend aus Gehäusemittelteil (3) und Gehäuseflanschen (4A, 4B), das zu prüfendes Rohr (2) dem elektrischen Feld eines kapazitiven Dreielektroden-Verfahrens ausgesetzt wird, wobei die jeweilige Fehlstelle (13) Messsignale verursacht, die zum Markieren oder Ausschleusen der Fehlstelle (13) genutzt werden,
**dadurch gekennzeichnet, dass**
das elektrische Feld in dem, das zu prüfende Rohr umschließenden, Gehäusemittelteil (3) erzeugt wird, wobei das Gehäusemittelteil eine innenliegende rohrförmige Kondensatorelektrode (5) mindestens zwei parallel angeordnete, ringförmige Messelektroden (6A, 6B) und eine dritte Elektrode als Sendeantenne (9), die im zu prüfenden Rohr (2) nahezu ortsfest gehalten wird, umfasst.

2. Verfahren nach Anspruch 1, **dadurch gekennzeichnet, dass** zwischen den Gehäuseflanschen (4A; 4B) und einer im zu prüfenden polymeren Rohr (2) befindlichen Empfangsantenne (8) ein elektrisches Feld erzeugt wird.

3. Verfahren nach Anspruch 1, **dadurch gekennzeichnet, dass** zur Erzeugung des elektrischen Feldes die Kondensatorelektrode (5) sowohl mit dem negativen Pol ("kaltes Ende") einer hochfrequenten Wechselspannungsquelle (11), als auch mit Masse (GND) verschaltet wird.

4. Verfahren nach Anspruch 1 oder 2, **dadurch gekennzeichnet, dass** zur Erzeugung des elektrischen Feldes die Gehäuseflansche (4A, 4B) einerseits mit dem positiven Pol ("heißes Ende") einer hochfrequenten Wechselspannungsquelle (10) - vorzugsweise einem Rechtecksignal - und andererseits dem Schutzleiter, also dem Erdpotential (PE), verbunden werden.

5. Verfahren nach Anspruch 1, **dadurch gekennzeichnet, dass** die von den Messelektroden (6) empfangenen Signale einer Auswerteelektronik (11) zugeführt werden.

6. Verfahren nach einem der obigen Ansprüche vorzugsweise verwendet zur Inline-Kontrolle bei der Extrusion von Polymerrohren.

7. Vorrichtung zur Durchführung des Verfahrens nach einem der Ansprüche 1 bis 6 zur Detektion von Fehlstellen in Polymerrohren, insbesondere solche aus vernetztem Polyethylen, wobei die Vorrichtung aus einem Gehäuse (1) besteht, mit Gehäusemittelteil (3) und Gehäuseflanschen (4A, 4B), **dadurch gekennzeichnet, dass** das Gehäusemittelteil (3) eine Elektrodenaufnahme (7) enthält, in welche eine Kondensatorelektrode (5), Messelektroden (6A, 6B), die elektrische Isolierung dieser Komponenten untereinander und gegenüber dem Gehäuse (1) sowie die elektrischen Anschlüsse integriert sind, und das Gehäuse (1) einerseits mit dem positiven Pol einer hochfrequenten Wechselspannungsquelle (10) und andererseits mit dem Schutzleiter, also dem Erdpotential (PE) verbunden ist, und die Kondensatorelektrode (5) sowohl mit dem negativen Pol der hochfrequenten Wechselspannungsquelle (10) als auch mit Masse (GND) Kontakt hat sowie, dass die von den mindestens zwei paarweise angeordneten Messelektroden (6A, 6B) empfangenen, jeweils paarweisen Signale über Anschlüsse der Messelektroden (4A, 4B) einer Auswertelektronik (11) zugeführt sind, und, dass im Bereich des Gehäusemittelteils (3) in dem zu prüfenden Polymerrohr (2) eine Sendeantenne (9) angeordnet ist wobei die beiden beiderseits am Gehäusemittelteil (3) befestigten Gehäuseflansche (4A, 4B) der Übertragung eines hochfrequenten Sendesignals auf eine Empfangsantenne (8), sowie der Führung des zu prüfenden Polymerrohrs (2) dienen und die Empfangsantenne (8) mit der Sendeantenne (9) über einen elektrischen Leiter (12) verbunden ist.

8. Vorrichtung nach Anspruch 7, **dadurch gekennzeichnet, dass** das Gehäuse (1) als metallisches rohrförmiges Gehäuse (1) ausgebildet ist, bestehend aus Gehäusemittelteil (3) und den Gehäuseflanschen (4A; 4B).

9. Vorrichtung nach einem der Ansprüche 7 oder 8, **dadurch gekennzeichnet, dass** das metallische Gehäuse (1) mit der Elektrodenaufnahme (7) aus Gründen der besseren Zugänglichkeit und/oder Montage entlang seiner Symmetrielängsachse mehrfach geteilt ist.

10. Vorrichtung nach einem der Ansprüche 7 oder 8, **dadurch gekennzeichnet, dass** die Innendurchmesser der Gehäuseflansche (4A; 4B) und der Außendurchmesser des Polymerrohrs (2) so zu wählen sind, dass unter Berücksichtigung der Rohrtoleranzen ein Luftspalt $\leq 3$ mm erreicht wird.

## Claims

1. Method for detecting flaws in polymer tubes, in particular those made of crosslinked polyethylene, the tube (2) to be tested being exposed to the electrical field of a capacitive three-electrode method in a housing (1) comprising a housing central part (3) and housing flanges (4A, 4B), the respective flaw (13) giving rise to measurement signals which are used to mark or remove the flaw (13),
   **characterized in that**
   the electrical field is generated in the housing central part (3) which surrounds the tube to be tested, the housing central part comprising an internal tubular capacitor electrode (5), at least two annular measuring electrodes (6A, 6B) which are arranged in a parallel manner, and a third electrode as a transmitting antenna (9) which is held in a virtually fixed position in the tube (2) to be tested.

2. Method according to Claim 1, **characterized in that** an electrical field is generated between the housing flanges (4A; 4B) and a receiving antenna (8) which is situated in the polymer tube (2) to be tested.

**3.** Method according to Claim 1, **characterized in that**, in order to generate the electrical field, the capacitor electrode (5) is connected both to the negative pole ("cold end") of a high-frequency AC voltage source (11) and to earth (GND).

**4.** Method according to Claim 1 or 2, **characterized in that**, in order to generate the electrical field, the housing flanges (4A, 4B) are connected, on the one hand, to the positive pole ("hot end") of a high-frequency AC voltage source (10) - preferably a square-wave signal - and, on the other hand, to the protective earth conductor, that is to say the earth potential (PE).

**5.** Method according to Claim 1, **characterized in that** the signals received from the measuring electrodes (6) are supplied to evaluation electronics (11).

**6.** Method according to one of the preceding claims, which is preferably used for inline monitoring when extruding polymer tubes.

**7.** Device for carrying out the method according to one of Claims 1 to 6 for detecting flaws in polymer tubes, in particular those made of crosslinked polyethylene, the device comprising a housing (1) having a housing central part (3) and housing flanges (4A, 4B), **characterized in that** the housing central part (3) contains an electrode receptacle (7) in which a capacitor electrode (5), measuring electrodes (6A, 6B), the electrical insulation between these components and with respect to the housing (1) and the electrical connections are integrated, and the housing (1) is connected, on the one hand, to the positive pole of a high-frequency AC voltage source (10) and, on the other hand, to the protective earth conductor, that is to say the earth potential (PE), and the capacitor electrode (5) is in contact both with the negative pole of the high-frequency AC voltage source (10) and with earth (GND), and **in that** the respective pairs of signals which are received from the at least two measuring electrodes (6A, 6B) arranged in pairs are supplied to evaluation electronics (11) via connections of the measuring electrodes (6A, 6B), and **in that** a transmitting antenna (9) is arranged in the polymer tube (2) to be tested in the region of the housing central part (3), the two housing flanges (4A, 4B) which are fastened on both sides of the housing central part (3) being used to transmit a high-frequency transmission signal to a receiving antenna (8) and to guide the polymer tube (2) to be tested, and the receiving antenna (8) being connected to the transmitting antenna (9) via an electrical conductor (12).

**8.** Device according to Claim 7, **characterized in that** the housing (1) is in the form of a metallic tubular housing (1) comprising a housing central part (3) and the housing flanges (4A; 4B).

**9.** Device according to either of Claims 7 and 8, **characterized in that** the metallic housing (1) with the electrode receptacle (7) is divided several times along its longitudinal axis of symmetry for reasons of better accessibility and/or assembly.

**10.** Device according to either of Claims 7 and 8, **characterized in that** the internal diameters of the housing flanges (4A; 4B) and the external diameter of the polymer tube (2) should be selected in such a manner that an air gap of ≤ 3 mm is achieved taking into account the tube tolerances.

**Revendications**

**1.** Procédé de détection d'emplacements défectueux dans des tubes en polymère, en particulier dans des tubes en polyéthylène réticulé, dans lequel le tube (2) à tester est exposé dans un boîtier (1) constitué d'une partie centrale (3) de boîtier et de brides (4A, 4B) de boîtier au champ électrique d'un procédé capacitif à trois électrodes, chaque emplacement défectueux (13) provoquant des signaux de mesure qui sont utilisés pour repérer ou écarter l'emplacement défectueux (13),
**caractérisé en ce que**
le champ électrique est produit dans la partie centrale (3) du boîtier qui entoure le tube à tester, la partie centrale du boîtier comportant une électrode tubulaire intérieure (5) de condensateur, au moins deux électrodes annulaires de mesure (6A, 6B) disposées en parallèle et une troisième électrode qui sert d'antenne émettrice (9) qui est maintenue presque immobile dans le tube (2) à tester.

**2.** Procédé selon la revendication 1, **caractérisé en ce qu'**un champ électrique est produit entre les brides (4A ; 4B) du boîtier et une antenne réceptrice (8) située à l'intérieur du tube polymère (2) à tester.

**3.** Procédé selon la revendication 1, **caractérisé en ce que** pour former le champ électrique, l'électrode (5) de condensateur est raccordée à la fois au pôle négatif ("extrémité froide") d'une source (11) de tension alternative à haute fréquence et à la masse (GND).

**4.** Procédé selon les revendications 1 ou 2, **caractérisé en ce que** pour produire le champ électrique, les brides (4A, 4B) du boîtier sont reliées d'une part au pôle positif ("extrémité chaude") d'une source (10) de tension alternative à haute fréquence, de préférence à un signal rectangulaire, et d'autre part au conducteur de protection et donc au potentiel de terre (PE).

**5.** Procédé selon la revendication 1, **caractérisé en ce que** les signaux reçus en provenance de l'électrode de mesure (6) sont apportés à une électronique d'évaluation (11).

**6.** Procédé selon l'une des revendications précédentes, utilisé de préférence pour le contrôle en ligne lors de l'extrusion de tubes en polymère.

**7.** Dispositif en vue de l'exécution du procédé selon l'une des revendications 1 à 6, pour la détection d'emplacements défectueux dans des tubes en polymère, en particulier dans des tubes en polyéthylène réticulé, le dispositif étant constitué d'un boîtier (1) qui présente une partie centrale (3) de boîtier et des brides (4A, 4B) de boîtier, **caractérisé en ce que**

la partie centrale (3) du boîtier contient un logement (7) d'électrode dans lequel sont intégrées une électrode de condensateur (5), des électrodes de mesure (6A, 6B), l'isolation électrique de ces composants les uns par rapport aux autres et par rapport au boîtier (1) ainsi que des bornes de raccordement électrique,

**en ce que** le boîtier (1) est relié d'une part au pôle positif d'une source (10) de tension alternative à haute fréquence et d'autre part au conducteur de protection et donc au potentiel de terre (PE), **en ce que** l'électrode (5) de condensateur est en contact à la fois avec le pôle négatif de la source (10) de tension alternative à haute fréquence et à la masse (GND), **en ce que** les signaux reçus par paires en provenance des deux ou plusieurs lectrodes de mesure (6A, 6B) disposées par paires sont apportés à une électronique d'évaluation (11) par des bornes de raccordement des électrodes de mesure (6A, 6B) et **en ce que** dans la partie occupée par la partie centrale (3) du boîtier, une antenne émettrice (9) est disposée à l'intérieur du tube en polymère à tester (2), les deux brides (4A, 4B) du boîtier fixées sur chacun des deux côtés de la partie centrale (3) du boîtier servant à transmettre un signal d'émission à haute fréquence à une antenne de réception (8) ainsi qu'à guider le tube de polymère à tester (2), l'antenne réceptrice (8) étant reliée à l'antenne émettrice (9) par un conducteur électrique (12).

**8.** Dispositif selon la revendication 7, **caractérisé en ce que** le boîtier (1) est configuré comme boîtier tubulaire métallique (1) constitué de la partie centrale (3) du boîtier et des brides (4A ; 4B) du boîtier.

**9.** Dispositif selon l'une des revendications 7 ou 8, **caractérisé en ce que** le boîtier (1) avec son logement (7) d'électrode est divisé plusieurs fois le long de son axe longitudinal de symétrie pour permettre un meilleur accès et/ou son montage.

**10.** Dispositif selon l'une des revendications 7 ou 8, **caractérisé en ce que** le diamètre intérieur des brides (4A ; 4B) du boîtier et le diamètre extérieur du tube (2) en polymère sont sélectionnés de manière à obtenir un interstice d'air ≤ 3 mm en tenant compte des tolérances sur le tube.

EP 1 926 986 B1

**Fig. 1**

8

## IN DER BESCHREIBUNG AUFGEFÜHRTE DOKUMENTE

**In der Beschreibung aufgeführte Patentdokumente**

- DE 1095525